# EUROPÄISCHE PATENTSCHRIFT

(11) **EP 2 775 465 B1**
(45) Veröffentlichungstag und Bekanntmachung des Hinweises auf die Patenterteilung: **16.08.2017**
(21) Anmeldenummer: 13158067.2
(22) Anmeldetag: 06.03.2013
(51) Int. Cl.: G08B 17/12, G01J 5/00, G08B 29/18

(54) **Gefahrenmelder mit einem kontaktlos arbeitenden Wärmestrahlungssensor zur Ermittlung einer Umgebungstemperatur**
Hazard alarm comprising an infrared radiation sensor for detecting a flame as well as determining an ambient temperature
Alarme dotée d'un capteur de rayonnement infrarouge, destiné aussi bien à la détection du feu ouvert qu'à la détermination d'une température ambiante

(43) Veröffentlichungstag der Anmeldung: 10.09.2014
(73) Patentinhaber: Siemens Schweiz AG, 8047 Zürich (CH)
(72) Erfinder: Fischer, Martin, 8180 Bülach (CH); Stutz, Matthias, 8909 Zwillikon (CH)
(74) Vertreter: Maier, Daniel Oliver

(56) Entgegenhaltungen:
- EP-A1- 0 419 046
- WO-A1-2005/121727
- WO-A1-2011/141730
- DE-A1- 19 710 946
- US-A1- 2003 222 218

## Beschreibung

Gefahrenmelder, insbesondere Flammenmelder, mit einem im Infrarotbereich empfindlichen, kontaklos arbeitenden Wärmestrahlungssensor sowohl zur Detektion von offenem Feuer als auch zur Ermittlung einer Umgebungstemperatur. Aus WO 2011/141730 A1 ist ein Gefahrenmelder, insbesondere ein Flammenmelder, bekannt, der einen Pyrosensor für die Flammendetektion sowie einen Thermistor für die Erfassung der Umgebungstemperatur aufweist. Das Signal des Pyrosensors wird auf drei verschiedene Flackerfrequenzen untersucht. Bleiben die Amplituden der detektierten Flackerfrequenzen in etwa gleich groß, so wird ein gefährliches unkontrollierbares Feuer angenommen und ein Alarm ausgeben.

Aus EP 0 419 046 A1 ist ein Feuerdetektionssystem bekannt, welches die einfallende Infrarotstrahlung in eine Vielzahl von Wellenlängenbändern aufteilt und diese Bänder auf Änderungen hinsichtlich ihres absoluten Werts und hinsichtlich ihres Verhältnisses zueinander untersucht. In Abhängigkeit dieser zeitlichen Änderungen wird dann bestimmt, ob ein desaströses Feuer vorliegt oder nicht.

Die Erfindung betrifft einen Gefahrenmelder, insbesondere einen Flammenmelder, welcher ein Meldergehäuse mit einer Melderhaube aufweist. Der Gefahrenmelder ist vorzugsweise als Punktmelder ausgebildet. Es ist ein Gehäuseteil der Melderhaube für Wärmestrahlung im mittleren Infrarotbereich durchlässig. Zudem ist im Meldergehäuse ein für die eingehende Wärmestrahlung empfindlicher, kontaktlos arbeitender und optisch auf das Gehäuseteil ausgerichteter Wärmestrahlungssensor angeordnet. Dem Wärmestrahlungssensor ist eine Verarbeitungseinheit zur Weiterverarbeitung eines vom Wärmestrahlungssensor ausgegebenen Sensorsignals nachgeschaltet.
Die Verarbeitungseinheit ist dazu eingerichtet, das Sensorsignal auf das Auftreten von signifikanten Fluktuationen oder Flackerfrequenzen für offenes Feuer hin zu überwachen.

Die Erfindung betrifft weiterhin ein Verfahren zur Detektion von offenem Feuer und zur Ermittlung eines Temperaturwertes in der Umgebung eines Gefahrenmelders.

Mit "Infrarotbereich" ist insbesondere der Längenwellenbereich von 2 µm bis 50 µm gemeint, der auch als mittleres Infrarot, abgekürzt als MIR, bezeichnet wird.

Der Wärmestrahlungssensor weist vorzugsweise eine Thermosäule oder ein Bolometer auf. Geläufiger ist in der Fachsprache jedoch der englischsprachige Fachbegriff "Thermopile" für eine Thermosäule. Sowohl die Thermosäule als auch das Bolometer weisen typischerweise jeweils eine (einzige) für Wärmestrahlung empfindliche Sensorschicht auf. Sie sind insbesondere nicht-bildgebend, d.h. sie weisen keine Matrix aus einer Vielzahl von wärmestrahlungsempfindlichen "Pixeln" auf, wie z.B. eine Matrix aus 16 mal 16, oder 32 mal 32 "Pixeln". In diesem Sinne weisen die betrachteten Wärmestrahlungssensoren lediglich ein einziges "Pixel" auf.

Weiterhin sind aus dem Stand der Technik Flammenmelder als Gefahrenmelder bekannt, die zur Detektion von offenem Feuer mit seinen charakteristischen modulierten Emissionen sowie zum Ausgeben eines Alarms in weniger als einer Sekunde, typischerweise in einem Bruchteil einer Sekunde, vorgesehen sind. Derartige Flammenmelder sind hinsichtlich der Signalverarbeitung auf die charakteristischen Flackerfrequenzen von offenem Feuer, das heisst von Flammen und lodernder Glut, im Infrarotbereich und gegebenenfalls im sichtbaren und ultravioletten Bereich abgestimmt.

Bei weiteren bekannten, zur Temperaturerfassung eingerichteten Gefahrenmeldern, ist der Temperatursensor vorzugsweise am Melderscheitel angebracht, um die Umgebungstemperatur des Gefahrenmelders möglichst richtungsunabhängig zu erfassen. Der Temperatursensor ist typischerweise ein NTC-Widerstand. Die elektrische Verbindung zu einer entsprechenden Auswerteeinheit, die sich auf einem Schaltungsträger des Gefahrenmelders befindet, erfolgt durch eine Verbindungsleitung, die zumeist durch den optisch sensiblen Innenraum des Meldergehäuses und durch die darin befindliche Messkammer für die Rauchdetektion führt. Dies führt zu aufwändigen Konstruktionen hinsichtlich der Messkammer und erschwert die Montage des Gefahrenmelders. Darüber hinaus sind nachteilig optische Streuungen an der Durchführung der Verbindungsleitung möglich.

Ein gravierendes Problem dabei ist auch, dass die Umgebungstemperatur mittels des NTC-Widerstands nur punktförmig erfasst wird. Dies erfordert eine sehr genaue mechanische Positionierung. Untersuchungen dazu haben gezeigt, dass bereits Abweichungen von weniger als 1mm vom Scheitelpunkt, das heisst von der geometrischen zentralen Position, zu signifikanten Richtungsabhängigkeiten führen können. Darüber hinaus ist es nachteilig erforderlich, dass der NTC-Widerstand mechanisch gegenüber der Umgebung geschützt werden muss, wie z.B. mittels eines separaten Doms oder einer Haube.

Ausgehend von dem eingangs genannten Stand der Technik ist es eine Aufgabe der Erfindung, einen Gefahrenmelder anzugeben, der auf einfache Weise eine Detektion von offenem Feuer und eine Erfassung der Umgebungstemperatur erlaubt.

Es ist eine weitere Aufgabe der Erfindung, ein korrespondierendes Verfahren zur Detektion von offenem Feuer und zur Erfassung der Umgebungstemperatur anzugeben.

Diese Aufgaben werden durch die Gegenstände der unabhängigen Patentansprüche gelöst. Vorteilhafte Ausführungsformen der Erfindung sind in den abhängigen Ansprüchen beschrieben.

Erfindungsgemäss ist die Verarbeitungseinheit zusätzlich dazu eingerichtet, aus einem Gleichanteil des Sensorsignals einen Temperaturwert für eine Umgebungstemperatur in der Umgebung des Gefahrenmelders zu ermitteln.

Der Kern der Erfindung liegt in der Erkenntnis, dass einerseits schnelle Änderungen des Sensorsignals für die Detektion von offenem Feuer und andererseits der Gleichanteil des Sensorsignals, d.h. der DC-Anteil, zur Temperaturermittlung auf pyrometrischem Wege messtechnisch genutzt werden kann.

Der Gleichanteil entspricht dabei einem im Wesentlichen konstanten und sich nur langsam ändernden Wert für die Wärmestrahlung, die von dem im optischen Erfassungsbereich befindlichen, für Wärmestrahlung durchgängigen Gehäuseteil der Melderhaube abgestrahlt wird. Diese Wärmestrahlung steht in einem direkten Zusammenhang mit der Temperatur des Gehäuseteils, wobei die Temperatur des Gehäuseteils, d.h. genauer gesagt, die an der Innenseite des Gehäuseteils liegende Temperatur, mit geringer, vertretbarer Verzögerung der tatsächlichen Umgebungstemperatur folgt. Dabei erwärmt sich die Melderhaube und somit das Gehäuseteil bei bestimmungsgemässer Deckenmontage üblicherweise auch am schnellsten.

Vorzugsweise ist das Gehäuseteil rotationssymmetrisch. Es ist insbesondere kreisscheibenförmig oder in geometrischer Hinsicht Teil einer Kugeloberfläche.

Dadurch können vorteilhaft mittels nur eines Wärmestrahlungssensors zwei charakteristische Brandkenngrössen erfasst werden. Ein separates weiteres Bauelement für die Temperaturerfassung in der Umgebung des Gefahrenmelders kann entfallen.

Durch die kontaktlose Erfassung der vom Gehäuseteil abgestrahlten Wärmestrahlung entfällt weiterhin vorteilhaft eine aufwändige und EMV-anfällige elektrische Verdrahtung hin zu einer Verarbeitungseinheit für die Erfassung und Auswertung der Temperatur. Zudem befindet sich der "Temperatursensor" vorteilhaft geschützt im Inneren des Gehäuses.

Besonders vorteilhaft ist es, wenn der Wärmestrahlungssensor als SMD-Bauteil auf diesem Schaltungsträger angeordnet ist. Im Vergleich zu einer hierzu erforderlichen manuellen Montage des NTC-Widerstands entfällt hier diese. Zudem ist eine automatisierte SMD-Montage deutlich günstiger und exakter.

Darüber hinaus ist mittels der erfindungsgemässen kontaktlosen Umgebungstemperaturerfassung eine im Vergleich zu einer mehr punktuellen Temperaturerfassung bei einem NTC-Widerstand grössere Fläche erfassbar. Im Vergleich zur herkömmlichen Montage mit einem NTC-Widerstand sind Montage- und Bauteiltoleranzen vorteilhaft nun weitaus weniger kritisch.

Nach einer Ausführungsform ist die Meldehaube aus dem für Wärmestrahlung im mittleren Infrarotbereich durchlässigen Gehäuseteil und einem angrenzenden, lichtdicht ausgeführten Restteil zusammengesetzt. Mit "lichtdicht" ist gemeint, dass der Restteil der Melderhaube weder für sichtbares Licht, noch für Infrarotlicht durchlässig. Mit "sichtbarem Licht" ist der für den Menschen optisch wahrnehmbare Lichtwellenlängenbereich von etwa 380 nm bis 780 nm gemeint. Der Werkstoff des Restteils der Melderhaube ist vorzugsweise ein weisser Kunststoff, wie z.B. Polyethylen, in welches UV-stabilisierte TiO₂- oder ZnO-Partikel eingebracht ist. Ein derartiger Kunststoff wird seit langem bei herkömmlichen Brand- und Rauchmeldern verwendet.

Nach einer Ausführungsform weist das Gehäuseteil einen Werkstoff auf, der für Licht im mittleren Infrarotbereich, insbesondere in einem Wellenlängenbereich von 3 µm bis 20 µm, durchlässig ist. Ein derartiger Werkstoff kann z.B. ein Kunststoff, wie z.B. ein thermoplastischer Kunststoff auf Basis von Polymethylmethacrylat oder Polycarbonat, ein Glas, wie z.B. Quarzglas oder Germaniumglas, oder eine Keramik sein, wie z.B. transparente feinkristalline Spinell-Keramiken auf Basis von Magnesium- und Aluminiumoxid.

Einer weiteren Ausführungsform zufolge sind im Werkstoff des Gehäuseteils Streupartikel in einem derartigen Volumenanteil und in einer derartigen Grössenverteilung eingebracht sind, dass diese das sichtbare Licht zerstreuen und das infrarote Licht zum Grossteil passieren lassen.

Alternativ oder zusätzlich kann zumindest ein Teil der Oberfläche des Gehäuseteils eine derartige Strukturierung aufweisen, dass diese das sichtbare Licht zerstreut und das infrarote Licht zum Grossteil passieren lässt. Die Strukturierung weist vorzugsweise Strukturbreiten im Bereich der Wellenlänge des Infrarotlichts auf, das heisst Strukturbreiten im Bereich von 3 µm bis 20 µm. Die Strukturen können z.B. Punktierungen oder Linien sein. Eine solche Strukturierung kann z.B. durch Ätzen, feinstes Bürsten oder Elektronenpolieren der Gehäuseteiloberfläche erreicht werden.

Insbesondere erscheint der Werkstoff in den drei zuvor genannten Ausführungsformen im optisch sichtbaren Bereich als undurchsichtig, insbesondere als opak oder weiss-opak. Der Gefahrenmelder weist somit ein Gehäuse bzw. eine Melderhaube als Teil des Gehäuses auf, welches in seiner Bauart einem Betrachter von anderen Brandmeldern an sich bekannt ist. Anderenfalls könnte ein dunkel und gläsern erscheinendes Gehäuseteil in der Melderhaube den Argwohn bei dem Betrachter erwecken, es könnte sich hier um eine Überwachungskamera handeln. Dies wird durch das im optisch sichtbaren Bereich undurchsichtige, vorzugsweise weisse Gesamterscheinungsbild des Gefahrenmelders vorteilhaft vermieden.

Nach einer weiteren Ausführungsform sind im Werkstoff des Gehäuseteils Wärmeabstrahlpartikel mit einem Emissionsgrad für die Wärmeabstrahlung im Infrarotbereich von zumindest 0.75, vorzugsweise von zumindest 0.9, eingebracht. Die Wärmeabstrahlpartikel können z.B. Russteilchen sein. Durch die dadurch bedingte höhere Wärmeabstrahlung ist bei gleicher Temperatur eine bessere Messauswertung mit höherer Genauigkeit möglich.

Einer weiteren vorteilhaften Ausführungsform zufolge befindet sich das Gehäuseteil zur weitgehend richtungsunabhängigen Erfassung der Umgebungstemperatur an einer zentralen Position, insbesondere in der Gehäusemitte. Da sich das Gehäuseteil in der Mitte der Melderhaube aus jeder Richtung ähnlich schnell erwärmt, ist durch die zentrale Anordnung eine deutlich kleinere Richtungsabhängigkeit im thermischen Ansprechverhalten erzielbar.

Nach einer weiteren Ausführungsform ist die Verarbeitungseinheit zur rechnerischen Ermittlung und Ableitung des Temperaturwertes aus dem Gleichanteil des Sensorsignals und aus einem gespeicherten Wert für den Emissionsgrad des Gehäuseteils eingerichtet. Die rechnerische Ermittlung des Temperaturwertes ist allgemein nach dem pyrometrischen Messprinzip bekannt. Der hierzu erforderliche Rechenaufwand kann vorteilhaft von einer sowieso zur Steuerung und Auswertung des Gefahrenmelders vorgesehenen Verarbeitungseinheit mit übernommen werden. Der Emissionsgrad des Gehäuseteils der Melderhaube ist dabei von der Oberflächenbeschaffenheit und/oder dessen Werkstoff abhängig. Der hierzu erforderliche Emissionsgrad kann z.B. im Rahmen einer Musterprüfung messtechnisch ermittelt werden. Der ermittelte Wert kann dann in der Verarbeitungseinheit elektronisch gespeichert sein oder aus einem damit verbundenen nichtflüchtigen Halbleiterspeicher geladen werden. Die Verarbeitungseinheit ist vorzugsweise ein Mikrocontroller. Ein solcher Mikrocontroller weist dann die für eine rechnerische Ermittlung und Ableitung des Temperaturwertes aus einem aktuellen Wert des Sensorsignals und aus dem gespeicherten Emissionswert notwendigen Rechenschritte auf. Der Mikrocontroller kann auch einen A/D-Umsetzer zur Umsetzung des vom Wärmestrahlungssensor ausgegebenen Sensorsignals in einen entsprechenden Digitalwert aufweisen. Vorzugsweise ist der Mikrocontroller dazu eingerichtet, einen Grossteil oder sämtliche Steuerung- und Auswerteaufgaben des Gefahrenmelders bis hin zur Alarmausgabe zu übernehmen.

Alternativ dazu kann der Gefahrenmelder auch zwei für Wärmestrahlung im Infrarotbereich empfindliche, kontaktlos arbeitende Wärmestrahlungssensoren mit voneinander verschiedener spektraler Wärmestrahlungsempfindlichkeit sowie die Verarbeitungseinheit aufweisen. Die Verarbeitungseinheit ist in diesem Fall zur Ermittlung des Temperaturwertes auf Basis einer Verhältnispyrometrie eingerichtet. Es ist dann aus dem Verhältnis zweier erfasster Gleichanteile der Sensorsignalwerte der Temperaturwert eindeutig ermittelbar. In diesem Fall entfällt die vergleichsweise aufwändige rechnerische Ermittlung des Temperaturwertes auf Basis des Emissionsgrades.

Weiterhin alternativ kann für die Detektion von offenem Feuer und für Ermittlung der Umgebungstemperatur weiterhin nur ein Wärmestrahlungssensor vorgesehen sein, ohne dass eine Ermittlung und Berücksichtigung des Emissionsgrades erforderlich wäre. In diesem Fall ist dem Wärmestrahlungssensor z.B. ein elektrisch ansteuerbares optisches Filter vorgeschaltet, so dass zwei voneinander verschiedene Filterfrequenzbereiche einstellbar sind. Die elektrische Ansteuerung und die dazu entsprechende Auswertung des Gleichanteils des Sensorsignals auf Basis einer Verhältnispyrometrie erfolgt dann vorzugsweise durch die Verarbeitungseinheit. Das optische Filter kann z.B. derart ausgelegt sein, dass es auf eine Filterfrequenz von 4 µm oder 5.5 µm mit jeweils einer Bandbreite von 0.1 µm um diese Filterfrequenzen umgeschaltet werden kann.

Dadurch ist besonders vorteilhaft eine spektrale Auswertung der Fluktuationen und Flackerfrequenzen im Hinblick auf die Detektion von offenem Feuer möglich. Dadurch wird die Zuverlässigkeit der Detektion erhöht.

Nach einer weiteren Ausführungsform sind der Wärmestrahlungssensor und die Verarbeitungseinheit in einem Bauteil zu einem kontaktlos arbeitenden Flammenmelder/Temperatursensor zusammengefasst. Dadurch verringert sich vorteilhaft der Entwicklungs-, Bauteil- und Montageaufwand.

Gemäss einer weiteren Ausführungsform weist der Wärmestrahlungssensor eine wärmestrahlungsempfindliche Sensorfläche auf. Es ist zwischen der Sensorfläche und dem Gehäuseteil eine für Licht im mittleren Infrarotbereich transparente optische Linse angeordnet. Dadurch ist kann durch den Wärmestrahlungssensor ein grösserer Erfassungsbereich auf das Vorhandensein von offenem Feuer überwacht werden.

Alternativ oder zusätzlich ist zwischen der Sensorfläche und dem Gehäuseteil in der Melderhaube ein Lichtleiter angeordnet. Der Lichtleiter ist für Licht im mittleren Infrarotbereich transparent. In diesem Fall kann der Wärmestrahlungssensor z.B. an einem Aussenrand auf dem Schaltungsträger oder in einem unkritischen Bereich im Falle einer vorhandenen optischen Messkammer für Rauchpartikel angeordnet sein. Dagegen kann das Gehäuseteil weiterhin an zentraler Position an der Innenseite der Melderhaube verbleiben, wobei die Symmetrieachsen des Gehäuseteils und des gesamten Gehäuses vorzugsweise miteinander fluchten. Auch in diesem Fall liegen sich der Wärmestrahlungssensor und das Gehäuseteil der Melderhaube an der zentralen Position optisch gegenüber. Denn die vom Gehäuseteil in den Lichtleiter eingekoppelte Wärmestrahlung verläuft über mehrere Totalreflexionen im Lichtleiter zur Auskopplung auf die Sensorfläche des Wärmestrahlungssensors. Dadurch kann vorteilhaft der Innenraum des Meldergehäuses frei gehalten werden, wie z.B. zur Aufnahme einer optischen Messkammer. Optisch störende Komponenten, wie z.B. durch die Messkammer geführte Verbindungsleitungen, können vorteilhaft entfallen. Zudem vereinfacht sich die Montage erheblich. Gemäß der Erfindung weist der Wärmestrahlungssensor eine Thermosäule oder ein Bolometer auf. Gegenüber einem auf dem pyroelektrischen Effekt basierenden Sensor, der physikalisch bedingt nur in der Lage ist, dynamische Änderungen eines warmen Objekts zu erfassen, sind Thermosäulen sowie Bolometer in der Lage, statische wie auch dynamische Wärmeunterschiede zu erfassen.

Ein Beispiel für eine als SMD-Bauelement erhältliche Thermosäule ist z.B. der "Infrared Thermopile Sensor TMP006" von Texas Instrument mit Gehäuseabmessungen von 1.6 mm x 1.6 mm. Dieses Bauelement verfügt zudem über eine digitale Datenschnittstelle für die Ausgabe eines bereits digitalen Sensorsignals zur möglichen Weiterverarbeitung durch einen Mikrocontroller oder Mikroprozessor. Im zugehörigen "User's Guide" mit Ausgabestand Mai 2011 sind mathematische Gleichungen angegeben, um aus einem gegebenen Emissionsgrad, aus einer dem Sensorsignal entsprechenden Sensorspannung und weiteren Parametern wie Chiptemperatur und Kalibrierungsfaktor einen Temperaturwert rechnerisch zu ermitteln. Die rechnerische Lösung dieser Gleichungen kann mittels geeigneter Softwareroutinen dann auf einem nachgeschalteten Mikrocontroller erfolgen.

Einer weiteren vorteilhaften Ausführungsform zufolge ist die Verarbeitungseinheit dazu eingerichtet, eine erste Meldung im Falle detektierter signifikanter Fluktuationen oder Flackerfrequenzen sowie eine zweite Meldung auszugeben, falls der ermittelte Temperaturwert für die Umgebung des Gefahrenmelders einen vorgegebenen Temperaturvergleichswert überschreitet. Diese Meldung kann z.B. eine Alarmmeldung sein, wenn ein Temperaturwert von z.B. 65°C überschritten wird. Die Meldung kann kabelgebunden oder über Funk an eine Gefahrenmeldezentrale oder auch optisch und/oder akustisch direkt am Gefahrenmelder ausgegeben werden.

Nach einer weiteren Ausführungsform ist im Gefahrenmelder ein Gassensor für Brandrauchgase und/oder eine Messkammer mit einer Streulichtanordnung zur Detektion von Rauchpartikeln aufgenommen. Es ist im Gehäuse zumindest eine Eintrittsöffnung für die zu detektierenden Brandrauchgase oder Rauchpartikel angeordnet. Dadurch stehen weitere Brandkenngrössen für eine zuverlässigere Gefahrenauswertung zur Verfügung. Diese können in geeigneter Weise zu einem Algorithmus im Sinne einer Multikriterienauswertung verknüpft werden.

Im Falle eines optischen Rauchmelders können diese eine oder mehrere im oder am Meldergehäuse angeordnete Streulichtanordnungen zur Detektion von Rauchpartikeln aufweisen. Der optische Rauchmelder kann dabei als offener Rauchmelder ausgebildet sein, bei dem der Detektionsraum ausserhalb des Meldergehäuses liegt. Er kann auch eine im Meldergehäuse angeordnete geschlossene Messkammer für die Rauchdetektion aufweisen. Eine derartige optische Messkammer wird auch als Labyrinth bezeichnet, welche einerseits durch optische Blenden gegen Fremdlicht abgeschirmt ist, jedoch andererseits für zu detektierende Rauchpartikel durchgängig ist. Hierzu weist das Meldergehäuse zumindest eine Eintrittsöffnung für den möglichen Eintritt von Rauchpartikeln in die optische Messkammer auf.

Es kann im Gefahrenmelder alterativ oder zusätzlich ein Gassensor zur Detektion von Brandrauchgasen wie CO oder NOₓ aufgenommen sein. Dazu ist im Gehäuse zumindest eine Eintrittsöffnung für die zu detektierenden Brandrauchgase angeordnet. Alterativ oder zusätzlich kann der Gefahrenmelder eine nach dem optischen Extinktionsverfahren und/oder eine nach dem akustooptischen Prinzip arbeitende Detektoreinheit aufweisen.

Durch Berücksichtigung unterschiedlicher Brandkenngrössen, wie z.B. der Umgebungstemperatur zusammen mit einem brandtypischen Gaskonzentrationswert und/oder mit einem optisch erfassten Rauchpartikelkonzentrationswert, sind durch die Verarbeitungseinheit genauere Analysen und Plausibilitätsprüfungen möglich. Die Ausgabe von Fehlalarmen wird mittels einer solchen Multikriterienauswertung deutlich reduziert.

Die betrachteten Gefahrenmelder können über eine gemeinsame Melderleitung, insbesondere über eine Zweidrahtleitung, signal- und/oder datentechnisch mit einer Gefahrenmeldezentrale bzw. mit einer Brandmeldezentrale verbunden sein. Es können mehrere derartiger Gefahrenmelder in Meldergruppen oder Melderlinien an eine solche Gefahrenmeldezentrale angeschlossen sein, über die typischerweise auch die elektrische Versorgung der Gefahrenmelder mit Strom erfolgt. Alternativ oder zusätzlich können die Gefahrenmelder "drahtlos" ausgeführt sein. In diesem Fall kommunizieren diese vorzugweise über Funk mit der Gefahrenmeldezentrale oder mit weiteren Gefahrenmeldern.

Die Aufgabe der Erfindung wird weiterhin durch ein Verfahren zur Detektion von offenem Feuer sowie zur Ermittlung eines Temperaturwertes in der Umgebung eines Gefahrenmelders gelöst, wobei eine durch ein für Wärmestrahlung im mittleren Infrarotbereich, insbesondere in einem Wellenlängenbereich von 3 µm bis 20 µm, durchlässiges Gehäuseteil eingehende Wärmestrahlung kontaktlos mittels eines dafür empfindlichen Wärmestrahlungssensors, insbesondere mittels einer Thermosäule oder eines Bolometers, als Sensorsignal erfasst wird. Es wird einerseits das Sensorsignal auf für offenes Feuer charakteristische Fluktuationen oder Flackerfrequenzen hin überwacht und bei Detektion eine erste Meldung ausgegeben. Es wird andererseits aus einem Gleichanteil des Sensorsignals ein Temperaturwert für eine Umgebungstemperatur in der Umgebung des Gefahrenmelders auf pyrometrischem Wege ermittelt. Schliesslich wird der Temperaturwert und/oder eine zweite Meldung ausgegeben, falls der ermittelte Temperaturwert einen vorgegebenen Temperaturvergleichswert überschreitet.

Nach einer Verfahrensvariante wird der Temperaturwert unter Berücksichtigung eines vom Werkstoff und/oder von der Oberflächenbeschaffenheit des Gehäuseteils abhängigen Emissionsgrades für dessen Wärmeabstrahlung im mittleren Infrarotbereich rechnerisch ermittelt.

Alternativ dazu kann der Temperaturwert auch auf Basis einer Verhältnispyrometrie ermittelt werden. Im Gegensatz zur sogenannten Einfarben-Pyrometrie, wie zuvor beschrieben, ist mittels der Verhältnispyrometrie, die auch als Zweifarben-Pyrometrie bezeichnet wird, keine Ermittlung und Berücksichtigung des Emissionsgrades erforderlich.

Die Erfindung sowie vorteilhafte Ausführungen der vorliegenden Erfindung werden am Beispiel der nachfolgenden Figuren erläutert. Dabei zeigen:
- FIG 1: ein Beispiel eines als Flammenmelder ausgebildeten Gefahrenmelders gemäss der Erfindung,
- FIG 2: ein Beispiel eines Gefahrenmelders nach einer ersten Ausführungsform,
- FIG 3: ein Beispiel eines Gefahrenmelders nach einer zweiten Ausführungsform,
- FIG 4: ein Messprinzip zur Detektion von offenem Feuer und zur Ermittlung eines Temperaturwertes in der Umgebung eines punktförmig ausgebildeten Gefahrenmelders gemäss der Erfindung, und
- FIG 5: ein Beispiel für einen als optischen Rauchmelder ausgebildeten Gefahrenmelder mit innenliegender optischer Messkammer und mit einem Lichtleiter gemäss der Erfindung.

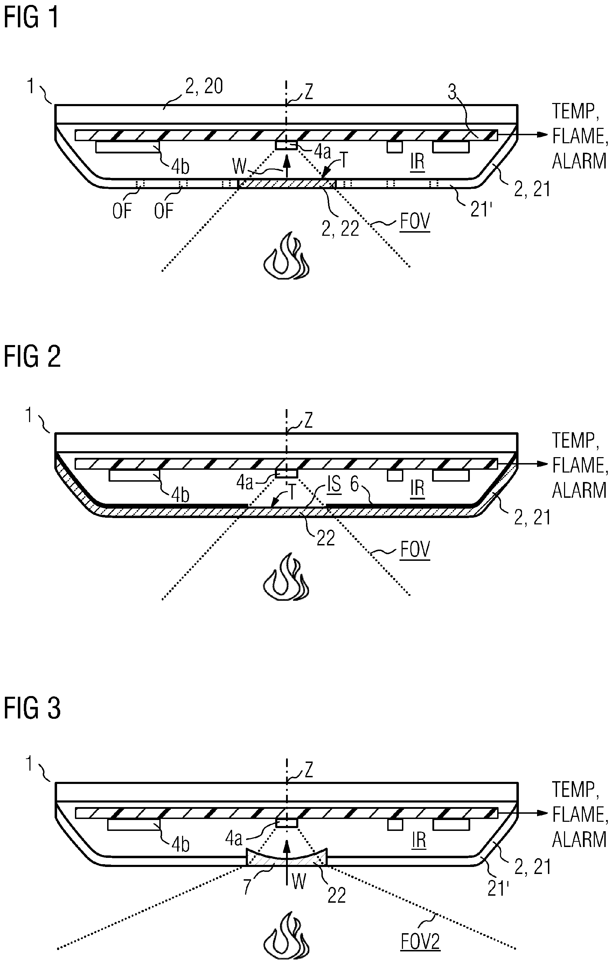

FIG 1 zeigt ein Beispiel eines als Flammenmelder ausgebildeten Gefahrenmelders 1 gemäss der Erfindung. Mit dem Bezugszeichen 2 ist ein Meldergehäuse bezeichnet, welches unter anderem eine mit 21 bezeichnete Melderhaube aufweist. Die Melderhaube 21 kann auch als Melderdeckel, Abdeckung oder als Melderkappe bezeichnet werden. Eingezeichnet ist weiterhin eine Symmetrieachse des typischerweise rotationssymmetrisch ausgeführten Meldergehäuses 2, die somit einen zentralen Bereich Z für den Gefahrenmelder 1 darstellt.

Weiterhin ist ein Gehäuseteil 22 der Melderhaube 21 dargestellt, welches für Wärmestrahlung W im mittleren Infrarotbereich durchlässig ist. Das Gehäuseteil 22 ist vorzugsweise rotationssymmetrisch ausgeführt, wie z.B. auch im vorliegenden Beispiel in Form einer Kreisscheibe. Der mit 21' bezeichnete, an das Gehäuseteil 22 angrenzende Restteil der Melderhaube 21 ist dagegen lichtdicht, d.h. durch dieses Restteil 21' gelangt faktisch kein Licht weder im sichtbaren noch im Infrarotbereich in das Gehäuseinnere IR. In der Melderhaube 21 können, wie gestrichelt eingezeichnet, auch Eintrittsöffnungen OF vorhanden sein, um z.B. den Eintritt von Rauchgasen in das Gehäuseinnere IR sowie deren Detektion mittels eines dort vorhandenen, nicht weiter dargestellten Gassensors zu ermöglichen. Mit dem Bezugszeichen 20 ist ein Meldersockel zur lösbaren Aufnahme des Gefahrenmelders 1 vorzugsweise an einer Decke bezeichnet. Im Gefahrenmelder 1 ist ein Schaltungsträger 3, wie z.B. eine Leiterplatte, aufgenommen. Auf diesem Schaltungsträger 3 sind typischerweise eine Mehrzahl von Bauelementen, wie Widerstände, Kondensatoren sowie Halbleiterbauelemente angeordnet. Aus Gründen der Übersichtlichkeit wurde auf eine detaillierte zeichnerische Darstellung verzichtet.

Dargestellt sind jedoch ein mit dem Bezugszeichen 4a bezeichneter, für Wärmestrahlung W im Infrarotbereich empfindlicher, kontaktlos arbeitender Wärmestrahlungssensor 4a sowie eine nachgeschaltete Verarbeitungseinheit 4b zur Weiterverarbeitung eines vom Wärmestrahlungssensor 4a ausgegebenen Sensorsignals gemäss der Erfindung. Mit FOV ist der optische Erfassungsbereich des Wärmestrahlungssensors 4a bezeichnet. Die Verarbeitungseinheit 4b ist zumindest zur Ermittlung eines aus einem Gleichanteil des Sensorsignals abgeleiteten Temperaturwertes TEMP für eine Umgebungstemperatur T in der Umgebung des Gefahrenmelders 1 vorgesehen bzw. eingerichtet. Die Verarbeitungseinheit 4b ist zudem dazu eingerichtet, das Sensorsignal auf das Auftreten von signifikanten Fluktuationen oder Flackerfrequenzen für offenes Feuer hin zu überwachen. Die Verarbeitungseinheit 4b kann gemäss der Erfindung alternativ oder zusätzlich, wie im vorliegenden Beispiel durch einen Pfeil angedeutet, dazu eingerichtet sein, eine erste Meldung FLAME im Falle detektierter signifikanter Fluktuationen oder Flackerfrequenzen sowie eine zweite Meldung ALARM auszugeben, falls der ermittelte Temperaturwert TEMP für die Umgebung des Gefahrenmelders einen vorgegebenen Temperaturvergleichswert überschreitet.

Weiterhin gemäss der Erfindung weist der Wärmestrahlungssensor 4a eine als SMD-Bauteil ausgeführte Thermosäule auf. Sie ist vorzugsweise für Infrarotlicht im Wellenlängenbereich von 2 µm bis 50 µm, insbesondere von 3 µm bis 20 µm, empfindlich.

Gemäss der Erfindung ist die Verarbeitungseinheit 4b zudem zur rechnerischen Ermittlung und Ableitung des Temperaturwertes TEMP aus dem Gleichanteil des Sensorsignals und aus einem gespeicherten Wert für den Emissionsgrad des Gehäuseteils 22 eingerichtet. Der Emissionsgrad ist dabei von der Oberflächenbeschaffenheit sowie vom Werkstoff des gezeigten Gehäuseteils 22 abhängig.

FIG 2 zeigt ein Beispiel eines Gefahrenmelders 1 nach einer ersten Ausführungsform. In diesem Fall weist die gesamte Melderhaube 21 einen für Infrarotlicht durchlässigen Werkstoff auf. Insbesondere ist dieser Werkstoff für sichtbares Licht undurchsichtig. Das Gehäuse erscheint somit für einen Betrachter weiss, matt-weiss oder weiss-opak. Natürlich kann der Werkstoff auch andersfarbig sein, wie z.B. rot, matt-rot oder rot-opak. Um Störeinflüsse durch seitliches infrarotes Streulicht auf den Wärmestrahlungssensor 4a zu vermeiden, ist zudem eine für infrarotes Licht lichtdichte Lochblende, wie z.B. in Form einer Klebefolie, an der Innenseite der Melderhaube 21 angebracht. In diesem Fall entspricht das Gehäuseteil 22 dem durch die Lochblende 6 nicht abgedeckten Teil der Melderhaube 21. Alternativ kann der Wärmestrahlungssensor 4a auch von einem Hohlzylinder aus einem für infrarotes und sichtbares Licht lichtdichten Werkstoff umgeben sein, wobei sich der Hohlzylinder vom Schaltungsträger 3 bis zur Innenseite des Gehäuseteils 22 bzw. zur Melderhaube 21 erstreckt.

FIG 3 zeigt ein Beispiel eines Gefahrenmelders 1 nach einer zweiten Ausführungsform. In diesem Fall ist das Gehäuseteil 22 zugleich eine optische Linse 7. Sie ist dazu vorgesehen, den Erfassungsbereich FOV2 im Vergleich zu dem Erfassungsbereich FOV gemäss FIG 1 und FIG 2 optisch aufzuweiten. Die optische Linse 7 ist dabei für Licht im mittleren Infrarotbereich transparent. Die Linse 7 kann als separates Bauteil in eine entsprechende Öffnung in der Melderhaube 21 eingesetzt sein. Alternativ kann die gesamte Melderhaube 21 aus einem für Infrarotlicht im Wellenlängenbereich von 2 µm bis 50 µm, insbesondere von 3 µm bis 20 µm, durchlässigem Werkstoff bestehen, wobei dann die in der FIG 3 gezeigte Linse 7 integral in der Melderhaube 21 mit ausgeformt ist. Zur Abschirmung kann, wie zuvor beschrieben, wieder eine Klebefolie als Lochblende 6 oder ein Hohlzylinder verwendet werden.

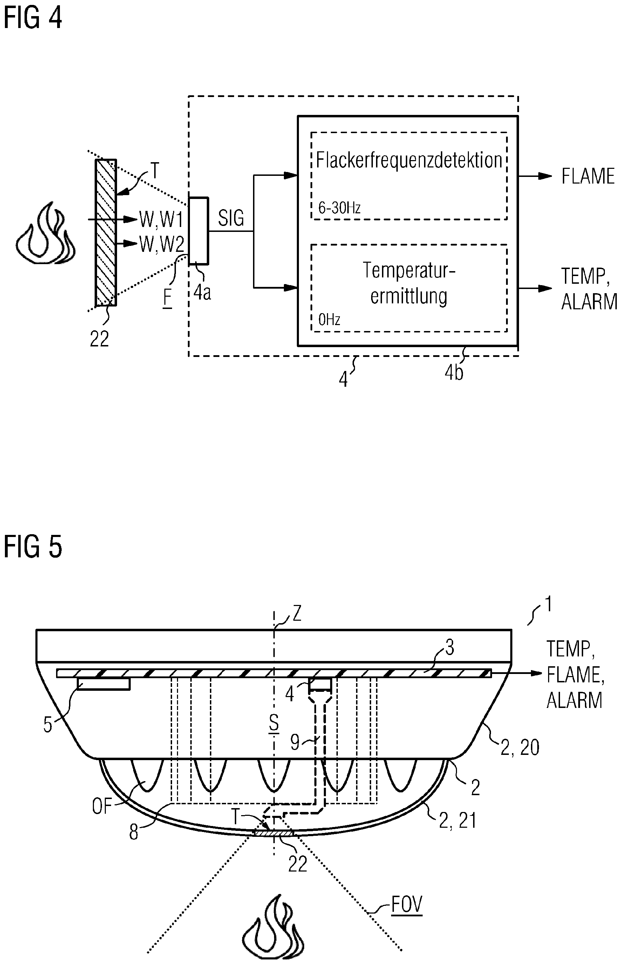

FIG 4 zeigt ein Messprinzip zur Detektion von offenem Feuer und zur Ermittlung eines Temperaturwertes TEMP in der Umgebung eines punktförmig ausgebildeten Gefahrenmelders 1.

Gemäss dem erfindungsgemässen Verfahren wird eine durch das Gehäuseteil 22 hindurchtretende erste Wärmestrahlung W1 sowie eine zweite, vom Gehäuseteil 22 selbst abgestrahlte zweite Wärmestrahlung W2 durch den Wärmestrahlungssensor 4a als Sensorsignal SIG erfasst. Die Summe der ersten und zweiten Wärmestrahlung W1, W2 ist dann letztlich die eingehende Wärmestrahlung W, für die der kontaktlos arbeitende und optisch auf das Gehäuseteil 22 ausgerichtete Wärmestrahlungssensor 4a empfindlich ist.

Gemäss der Erfindung wird einerseits das Sensorsignal SIG auf für offenes Feuer charakteristische Fluktuationen oder Flackerfrequenzen hin überwacht und bei Detektion eine erste Meldung FLAME ausgegeben. Dies kann z.B. durch eine Frequenzfilterung in einem Frequenzbereich von 6 bis 30 Hz erfolgen, der für Flackerfrequenzen und Emissionen für offenes Feuer typisch ist. Parallel dazu wird aus einem Gleichanteil des Sensorsignals SIG ein Temperaturwert TEMP für eine Umgebungstemperatur T in der Umgebung des Gefahrenmelders 1 auf pyrometrischem Wege ermittelt. Es wird der Temperaturwert TEMP und/oder eine zweite Meldung ALARM ausgegeben, falls der ermittelte Temperaturwert TEMP einen vorgegebenen Temperaturvergleichswert überschreitet. Die Ermittlung und Ausgabe ist durch eine Verarbeitungseinheit 4b realisiert, die zusammen mit dem Wärmestrahlungssensor 4a auch zu einem gemeinsamen Bauteil 4 zusammengefasst sein kann. Die Bezeichnung "0Hz" soll symbolisieren, dass hier der Gleichanteil im Sensorsignal SIG ausgewertet wird. Der Gleichanteil kann z.B. durch eine Tiefpassfilterung des Sensorsignals SIG mit einer Eckfrequenz von z.B. 1 Hz abgeleitet werden. Dadurch können auch Störsignale aus dem Sensorsignal SIG ausgefiltert werden.

FIG 5 zeigt schliesslich ein Beispiel für einen als optischen Rauchmelder ausgebildeten Gefahrenmelder 1 mit innenliegender Messkammer 8 und mit einem Lichtleiter 9 gemäss der Erfindung. Im vorliegenden Beispiel sind der Wärmestrahlungssensor und die Verarbeitungseinheit zu einem Bauteil im Sinne eines kombinierten Flammenmelder/Temperatursensors 4 zusammengefasst. Mit dem Bezugszeichen 5 ist eine übergeordnete Hauptverarbeitungseinheit bezeichnet.

Erfindungsgemäss ist zwischen der Sensorfläche F des Temperatursensors 4 bzw. zwischen der Sensorfläche F des Wärmestrahlungssensors 4a als Teil des Temperatursensors 4, und dem Gehäuseteil 22 im Gehäuseinneren IR ein Lichtleiter 9 angeordnet. Letzterer ist für Licht im mittleren Infrarotbereich transparent. Dadurch kann auf vorteilhafte Weise der optisch auf Streulicht hochsensible Innenbereich, insbesondere das Streulichtzentrum S, frei von störenden Leitungsdurchführungen gehalten werden. Der Lichtleiter 9 kann z.B. an das Messkammergehäuse geschnappt werden oder im Falle eines Kunststoffspritzgussteils an das Kammergehäuse angespritzt werden.

### Bezugszeichenliste

- 1: Gefahrenmelder, Flammenmelder
- 2: Meldergehäuse
- 3: Schaltungsträger, Leiterplatte
- 4: Temperatursensor
- 4a: Wärmestrahlungssensor, Thermosäule, Bolometer
- 4b: Verarbeitungseinheit, Mikrocontroller
- 5: weitere Verarbeitungseinheit, Hauptcontroller
- 6: Lochblende, Abblendfolie, Beschichtung
- 7: optische Linse
- 8: optische Messkammer, Labyrinth
- 9: Lichtleiter
- 20: Meldersockel
- 21: Melderhaube, Deckel, Abdeckung, Kappe
- 21': Restteil
- 22: Gehäuseteil

- ALARM: Meldung, Alarmmeldung
- F: Sensorfläche
- FOV, FOV2: Erfassungsbereich
- IR: Innenraum, Gehäuseinneres
- IS: Innenseite
- OF: Eintrittsöffnung
- S: Streulichtzentrum
- SIG: Sensorsignal
- T: Umgebungstemperatur
- TEMP: Temperaturwert
- FLAME: Meldung, Alarmmeldung
- W: Wärmestrahlung
- W1: Wärmestrahlung von aussen bzw. von offenem Feuer
- W2: Wärmestrahlung von Gehäuseteil
- Z: Zentrale Position, Hautsymmetrieachse

## Patentansprüche

1. Gefahrenmelder, insbesondere Flammenmelder, welcher ein Meldergehäuse (2) mit einer Melderhaube (21) aufweist, wobei ein Gehäuseteil (22) der Melderhaube (21) für Wärmestrahlung (W) im mittleren Infrarotbereich durchlässig ist, wobei im Meldergehäuse (2) ein für die eingehende Wärmestrahlung (W) empfindlicher, kontaktlos arbeitender und optisch auf das Gehäuseteil (22) ausgerichteter Wärmestrahlungssensor (4a) angeordnet ist, wobei dem Wärmestrahlungssensor (4a) eine Verarbeitungseinheit (4b) zur Weiterverarbeitung eines vom Wärmestrahlungssensor (4a) ausgegebenen Sensorsignals (SIG) nachgeschaltet ist, wobei der Wärmestrahlungssensor (4a) eine Thermosäule oder ein Bolometer ist, und wobei die Verarbeitungseinheit (4b) dazu eingerichtet ist, das Sensorsignal (SIG) auf das Auftreten von signifikanten Fluktuationen oder Flackerfrequenzen für offenes Feuer hin zu überwachen sowie aus einem Gleichanteil des Sensorsignals (SIG) einen Temperaturwert (TEMP) für eine Umgebungstemperatur (T) in der Umgebung des Gefahrenmelders zu ermitteln.

2. Gefahrenmelder nach Anspruch 1, wobei die Meldehaube (21) aus dem für Wärmestrahlung (W) im mittleren Infrarotbereich durchlässigen Gehäuseteil (22) und einem angrenzenden, lichtdicht ausgeführten Restteil (21') zusammengesetzt ist.

3. Gefahrenmelder nach Anspruch 1 oder 2, wobei das Gehäuseteil (22) einen Werkstoff aufweist, der für Licht im mittleren Infrarotbereich, insbesondere in einem Wellenlängenbereich von 3 *µ*m bis 20 *µ*m, durchlässig ist.

4. Gefahrenmelder nach Anspruch 3, wobei im Werkstoff des Gehäuseteils (22) Wärmeabstrahlpartikel mit einem Emissionsgrad für die Wärmeabstrahlung im Infrarotbereich von zumindest 0.75, vorzugsweise von zumindest 0.9, eingebracht sind.

5. Gefahrenmelder nach Anspruch 3 oder 4, wobei im Werkstoff des Gehäuseteils (22) Streupartikel in einem derartigen Volumenanteil und in einer derartigen Grössenverteilung eingebracht sind, dass diese das sichtbare Licht zerstreuen und das infrarote Licht zum Grossteil passieren lassen.

6. Gefahrenmelder nach einem der vorherigen Ansprüche, wobei sich das Gehäuseteil (22) zur weitgehend richtungsunabhängigen Erfassung der Umgebungstemperatur (T) an einer zentralen Position (Z), insbesondere in der Gehäusemitte befindet.

7. Gefahrenmelder nach einem der vorherigen Ansprüche, wobei die Verarbeitungseinheit (4b) zur rechnerischen Ermittlung und Ableitung des Temperaturwertes (TEMP) aus dem Gleichanteil des Sensorsignals (SIG) und aus einem gespeicherten Wert für den Emissionsgrad des Gehäuseteils (22) eingerichtet ist.

8. Gefahrenmelder nach Anspruch 7, wobei der Wärmestrahlungssensor (4a) und die Verarbeitungseinheit (4b) in einem Bauteil zu einem kontaktlos arbeitenden Temperatur-/Flammensensor (4) zusammengefasst sind.

9. Gefahrenmelder nach einem der vorherigen Ansprüche, wobei der Wärmestrahlungssensor (4a) eine wärmestrahlungsempfindliche Sensorfläche (F) aufweist und wobei zwischen der Sensorfläche (F) und dem Gehäuseteil (22) eine für Licht im mittleren Infrarotbereich transparente optische Linse (7) und/oder ein für Licht im mittleren Infrarotbereich transparenter Lichtleiter (9) angeordnet ist.

10. Gefahrenmelder nach einem der vorherigen Ansprüche, wobei die Verarbeitungseinheit (4b) dazu eingerichtet ist, eine erste Meldung (FLAME) im Falle detektierter signifikanter Fluktuationen oder Flackerfrequenzen sowie eine zweite Meldung (ALARM) auszugeben, falls der ermittelte Temperaturwert (TEMP) für die Umgebung des Gefahrenmelders einen vorgegebenen Temperaturvergleichswert überschreitet.

11. Gefahrenmelder nach einem der vorherigen Ansprüche, wobei im Gefahrenmelder ein Gassensor für Brandrauchgase und/oder eine Messkammer (8) mit einer Streulichtanordnung zur Detektion von Rauchpartikeln aufgenommen ist, und wobei im Gehäuse (2) zumindest eine Eintrittsöffnung (OF) für die zu detektierenden Brandrauchgase oder Rauchpartikel angeordnet ist.

12. Verfahren zur Detektion von offenem Feuer sowie zur Ermittlung eines Temperaturwertes (TEMP) in der Umgebung eines Gefahrenmelders (1), wobei eine durch ein für Wärmestrahlung (W) im mittleren Infrarotbereich, insbesondere in einem Wellenlängenbereich von 3 *µ*m bis 20 *µ*m, durchlässiges Gehäuseteil (22) eingehende Wärmestrahlung (W) kontaktlos mittels eines dafür empfindlichen Wärmestrahlungssensors (4a) als Sensorsignal (SIG) erfasst wird, wobei der Wärmestrahlungssensor eine Thermosäule oder ein Bolometer ist, wobei einerseits das Sensorsignal (SIG) auf für offenes Feuer charakteristische Fluktuationen oder Flackerfrequenzen hin überwacht und bei Detektion eine erste Meldung (FLAME) ausgegeben wird, und
wobei andererseits aus einem Gleichanteil des Sensorsignals (SIG) ein Temperaturwert (TEMP) für eine Umgebungstemperatur (T) in der Umgebung des Gefahrenmelders (1) auf pyrometrischem Wege ermittelt wird, und wobei der Temperaturwert (TEMP) und/oder eine zweite Meldung (ALARM) ausgegeben wird, falls der ermittelte Temperaturwert (TEMP) einen vorgegebenen Temperaturvergleichswert überschreitet.

13. Verfahren nach Anspruch 12, wobei der Temperaturwert (TEMP) unter Berücksichtigung eines vom Werkstoff und/oder von der Oberflächenbeschaffenheit des Gehäuseteils (22) abhängigen Emissionsgrades für dessen Wärmeabstrahlung im mittleren Infrarotbereich rechnerisch ermittelt wird.

14. Verfahren nach Anspruch 12, wobei der Temperaturwert (TEMP) auf Basis einer Verhältnispyrometrie ermittelt wird.

## Claims

1. Hazard alarm, especially a flame detector, comprising an alarm housing (2) with an alarm cover (21), wherein a housing part (22) of the alarm cover (21) is transparent for heat radiation (W) in the mid-infrared range, wherein a non-contact heat radiation sensor (4a) optically aligned to the housing part (22) and sensitive for the incident heat radiation (W) is disposed in the alarm housing (2), wherein the heat radiation sensor (4a) has a processing unit (4b) for further processing of a sensor signal (SIG) output by the heat radiation sensor (4a) connected downstream from it, wherein the heat radiation sensor (4a) is a thermopile or a bolometer, and wherein the processing unit (4b) is configured to monitor the sensor signal (SIG) for the occurrence of significant fluctuations or flicker frequencies for open fire as well as to establish from a steady component of the sensor signal (SIG) a temperature value (TEMP) for an ambient temperature (T) in the environment of the hazard alarm.

2. Hazard alarm according to claim 1, wherein the alarm cover (21) is composed of a housing part (22) permeable to heat radiation (W) in the mid-infrared range (22) and an adjoining, remaining part (21') embodied light-tight.

3. Hazard alarm according to claim 1 or 2, wherein the housing part (22) comprises a material which is permeable for light in the mid-infrared range, especially in a wavelength range from 3 µm to 20 µm.

4. Hazard alarm according to claim 3, wherein heat radiation particles with a degree of emission for the heat radiation in the infrared range of at least 0.75, preferably of a least 0.9, are introduced into the housing material of the housing part (22).

5. Hazard alarm according to claim 3 or 4, wherein stray particles of such a volume proportion and in such a size distribution are introduced into the material of the housing part (22) that these scatter the visible light and let the majority of the infrared light pass.

6. Hazard alarm according to one of the preceding claims, wherein the housing part (22), for largely direction-independent acquisition of the ambient temperature (T), is located at a central position (Z), especially in the middle of the housing.

7. Hazard alarm according to one of the preceding claims, wherein the processing unit (4b) is configured for computationally establishing and deriving the temperature value (TEMP) from the steady component of the sensor signal (SIG) and from a stored value for the degree of emission of the housing part (22).

8. Hazard alarm according to claim 7, wherein the heat radiation sensor (4a) and the processing unit (4b) are combined in one component into a non-contact temperature/flame sensor (4).

9. Hazard alarm according to one of the preceding claims, wherein the heat radiation sensor (4a) has a heat radiation-sensitive sensor surface (F) and wherein an optical lens (7) transparent for light in the mid-infrared range and/or an optical waveguide (9) transparent for light in the mid-infrared range is disposed between the sensor surface (F) and the housing part (22).

10. Hazard alarm according to one the preceding claims, wherein the processing unit (4b) is configured to output a first message (FLAME) in the event of detected significant fluctuations or flicker frequencies and to output a second message (ALARM) if the established temperature value (TEMP) for the environment of the hazard alarm exceeds a predetermined temperature comparison value.

11. Hazard alarm according to one of the preceding claims, wherein a gas sensor for fire flue gases and/or a measurement chamber (8) with a stray light arrangement for detection of smoke particles is accommodated in the hazard alarm, and wherein at least one entry opening (OF) for the fire flue gases or smoke particles to be detected is disposed in the housing (2).

12. Method for detection of open fire and for establishing a temperature value (TEMP) in the environment of a hazard alarm (1), wherein a heat radiation (W) entering a housing part (22) transparent for heat radiation (W) in the mid-infrared range, especially in a wavelength range from 3 µm to 20 µm, is detected in a non-contact manner by means of a heat radiation sensor (4a) sensitive for said radiation, as a sensor signal (SIG), wherein the heat radiation sensor is a thermopile or a bolometer, wherein on the one hand the sensor signal (SIG) is monitored for fluctuations or flicker frequencies characteristic for open fire and on detection a first message (FLAME) is output, and
wherein on the other hand a temperature value (TEMP) for an ambient temperature (T) in the environment of the hazard alarm (1) is established in pyrometric ways, and wherein the temperature value (TEMP) and/or a second message (ALARM) is output if the established temperature value (TEMP) exceeds a predetermined temperature comparison value.

13. Method according to claim 12, wherein the temperature value (TEMP) is established computationally, taking into account a degree of emission depending on the material and/or the surface property of the housing part (22), for its heat radiation in the mid-infrared range.

14. Method according to claim 12, wherein the temperature value (TEMP) is established on the basis of a ratio pyrometry.

## Revendications

1. Avertisseur de danger, en particulier détecteur de flammes, doté d'un boîtier de détecteur (2) comportant un capot de détecteur (21), une partie de boîtier (22) du capot de détecteur (21) étant perméable au rayonnement thermique (W) dans la plage infrarouge centrale, dans le boîtier de détecteur (2) étant situé un capteur de rayonnement thermique (4a) sensible au rayonnement thermique entrant(W), opérant sans contact et dirigé optiquement sur la partie de boîtier (22), en aval du capteur de rayonnement thermique (4a) étant montée une unité de traitement (4b) pour le traitement subséquent d'un signal de capteur (SIG) émis par le capteur de rayonnement thermique (4a), le capteur de rayonnement thermique (4a) étant une thermopile ou un bolomètre et l'unité de traitement (4b) étant conçue pour surveiller le signal de capteur (SIG) quant à la survenance de fluctuations significatives ou de fréquences de vacillement de feu ouvert et pour déterminer, à partir d'une composante continue du signal de capteur (SIG), une valeur de température (TEMP) pour une température ambiante (T) dans l'environnement de l'avertisseur de danger.

2. Avertisseur de danger selon la revendication 1, le capot de détecteur (21) étant composé de la partie de boîtier (22) perméable au rayonnement thermique (W) dans la plage infrarouge centrale et d'une partie restante (21') adjacente de réalisation opaque.

3. Avertisseur de danger selon la revendication 1 ou 2, la partie de boîtier (22) comportant un matériau perméable à la lumière dans la plage infrarouge centrale, en particulier dans une plage de longueur d'onde de 3 µm à 20 µm.

4. Avertisseur de danger selon la revendication 3, le matériau de la partie de boîtier (22) contenant particules à rayonnement thermique avec un degré d'émission du rayonnement thermique dans la plage infrarouge d'au moins 0.75, de préférence d'au moins 0.9.

5. Avertisseur de danger selon la revendication 3 ou 4, le matériau de la partie de boîtier (22) contenant des particules à diffusion dans une fraction volumique et avec une distribution de taille telles que celles-ci diffusent la lumière visible et laissent passer la lumière infrarouge en grande partie.

6. Avertisseur de danger selon l'une des revendications précédentes, la partie de boîtier (22) se trouvant, pour la détection largement non directionnelle de la température ambiante (T), à une position centrale (Z), en particulier au centre du boîtier.

7. Avertisseur de danger selon l'une des revendications précédentes, l'unité de traitement (4b) étant conçue pour la détermination par calcul et la dérivation de la valeur de température (TEMP) à partir de la composante continue du signal de capteur (SIG) et d'une valeur sauvegardée du degré d'émission de la partie de boîtier (22).

8. Avertisseur de danger selon la revendication 7, le capteur de rayonnement thermique (4a) et l'unité de traitement (4b) étant regroupés dans un composant pour former un capteur de température / de flamme (4) opérant sans contact.

9. Avertisseur de danger selon l'une des revendications précédentes, le capteur de rayonnement thermique (4a) présentant une surface de capteur sensible au rayonnement thermique (F) et entre la surface de capteur (F) et la partie de boîtier (22) étant agencés une lentille optique (7) transparente à la lumière dans la plage infrarouge centrale et/ou une fibre optique (9) transparente à la lumière dans la plage infrarouge centrale.

10. Avertisseur de danger selon l'une des revendications précédentes, l'unité de traitement (4b) étant conçue pour émettre un premier message (FLAME) en cas de détection de fluctuations significatives ou de fréquences de vacillement ainsi qu'un deuxième message (ALARM) si la valeur de température (TEMP) détectée de l'environnement de l'avertisseur de dangers dépasse une valeur de référence donnée de la température.

11. Avertisseur de danger selon l'une des revendications précédentes, l'avertisseur de danger logeant un capteur de gaz pour les gaz de fumée d'incendie et/ou une chambre de mesure (8) avec un système de lumière diffusée pour la détection de particules de fumée, et le boîtier (2) comportant au moins un orifice d'entrée (OF) pour les gaz de fumée d'incendie ou les particules de fumée à détecter.

12. Procédé de détection de feu ouvert et de détermination d'une valeur de température (TEMP) dans l'environnement d'un avertisseur de danger (1), un rayonnement thermique (W) entrant par une partie de boîtier (22) perméable au rayonnement thermique (W) dans la plage infrarouge moyenne, en particulier dans une plage de longueur d'onde de 3 µm à 20 µm, étant détecté sans contact au moyen d'un capteur de rayonnement thermique (4a) qui y est sensible en tant que signal de capteur (SIG), le capteur de rayonnement thermique étant une thermopile ou un bolomètre, d'une part, le signal de capteur (SIG) étant surveillé quant à des fluctuations ou des fréquences de vacillement caractéristiques d'un feu ouvert et un premier message (FLAME) étant émis en cas de détection et, d'autre part, une valeur de température (TEMP) d'une température ambiante (T) dans l'environnement de l'avertisseur de dangers (1) étant déterminée par des moyens pyrométriques à partir d'une composante continue du signal de capteur (SIG), et la valeur de température (TEMP) et/ou un deuxième message (ALARM) étant émis si la valeur de température déterminée (TEMP) dépasse une valeur de référence donnée de la température.

13. Procédé selon la revendication 12, la valeur de température (TEMP) étant déterminée par calcul compte tenu d'un degré d'émission, dépendant du matériau et/ou de la qualité de la surface de la partie de boîtier (22), de son rayonnement thermique dans la plage infrarouge moyenne.

14. Procédé selon la revendication 12, la valeur de température (TEMP) étant déterminée sur la base d'un ratio pyrométrique.
